# EUROPÄISCHE PATENTANMELDUNG

(11) **EP 2 510 769 A1**
(43) Veröffentlichungstag der Anmeldung: **17.10.2012**
(21) Anmeldenummer: 12401053.9
(22) Anmeldetag: 02.04.2012
(51) Int. Cl.: A01C 7/08

(54) **Pneumatische Einzelkornsämaschine**

(30) Priorität: 11.04.2011 DE 102011001941
(71) Anmelder: Amazonen-Werke H. Dreyer GmbH & Co. KG, 49205 Hasbergen (DE)
(72) Erfinder: Mertens, Daniel, 26135 Oldenburg (DE)

(57) **Zusammenfassung**

Landwirtschaftliche pneumatische Verteilmaschine zum Verteilen von körnigen Verteilergütern, insbesondere ein des Saatgutes und/oder Düngemittels mit zumindest einer Dosiervorrichtung für die dosierte pneumatische Förderung und Ausbringung des Verteilgutes aus dem Vorratsbehälter (1) über Ausbringleitungen zu Ausbringorganen, insbesondere Säscharen und/oder Düngerstreuern, wobei zumindest einigen der Ausbringleitungen Absperrmittel (12) zum Absperren der Ausbringleitungen zugeordnet sind. Um eine einfache Ausgestaltung der Verschließeinrichtung zum verschließen der Ausbringleitungen vorzuschlagen, ist vorgesehen, dass die Absperrmittel (12) als Quetschventile (12) ausgebildet sind.

## Beschreibung

Die Erfindung betrifft eine landwirtschaftliche pneumatische Verteilmaschine gemäß des Oberbegriffes des Patentanspruches 1.

Eine derartige landwirtschaftliche pneumatische Verteilmaschine ist beispielsweise durch die EP 0 803 177 A2 bekannt. Diese pneumatische Verteilmaschine weist einen Verteilerkopf mit einer integrierten Verschließeinrichtung für eine bestimmte Anzahl der von dem Verteilerkopf abzweigenden Ausbringleitungen auf. Diese Verschließeinrichtung weist in die Ausbringleitungen einschiebbare Schieber zum verschließen der jeweiligen Ausbringleitungen auf. Diese Ausgestaltung der Verschließeinrichtung ist relativ aufwändig.

Der Erfindung liegt die Aufgabe zu Grunde, eine einfache Ausgestaltung der Verschließeinrichtung zum verschließen der Ausbringleitungen vorzuschlagen.

Diese Aufgabe wird erfindungsgemäß dadurch gelöst, dass die Absperrmittel als Quetschventile ausgebildet sind.

Eine einfach Betätigung der Quetschventile lässt sich dadurch erreichen, dass die Quetschventile als pneumatische betätigbare Ventilelemente ausgebildet sind.

Die erfindungsgemäßen Quetschventile lassen sich auch bei einer Einzelkornsämaschine gemäß des Anspruches 3 anwenden.

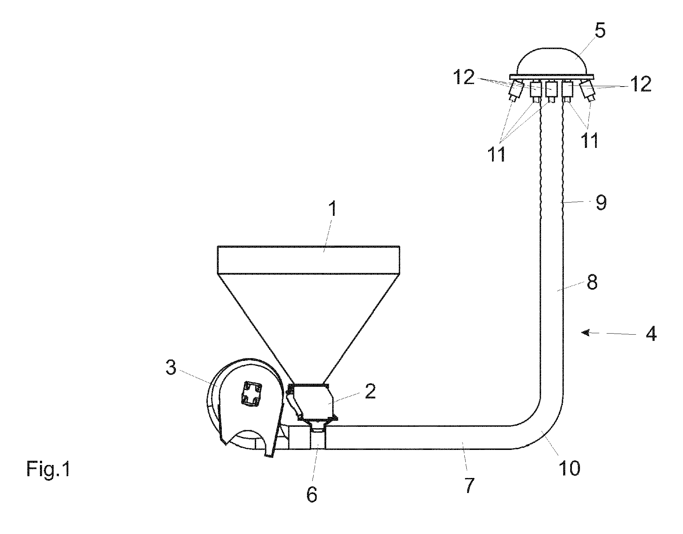

Weitere Einzelheiten der Erfindung sind der Beispielsbeschreibung und den Zeichnungen zu entnehmen. Hierbei zeigen
- Fig. 1: ein pneumatisches Verteilsystem mit einen Verteiler für eine landwirtschaftliche Verteilmaschine in Seitenansicht und in Prinzipdarstellung,
- Fig. 2: ein als Quetschventil ausgebildetes Absperrmittel, welches einer Ausbringleitung zu geordnet ist, im Schnitt, im vergrößerten Maßstab,
- Fig. 3: ein weiteres als Quetschventil ausgebildetes Absperrmittel, welches einer Ausbringleitung zu geordnet ist, im Schnitt, im vergrößerten Maßstab,

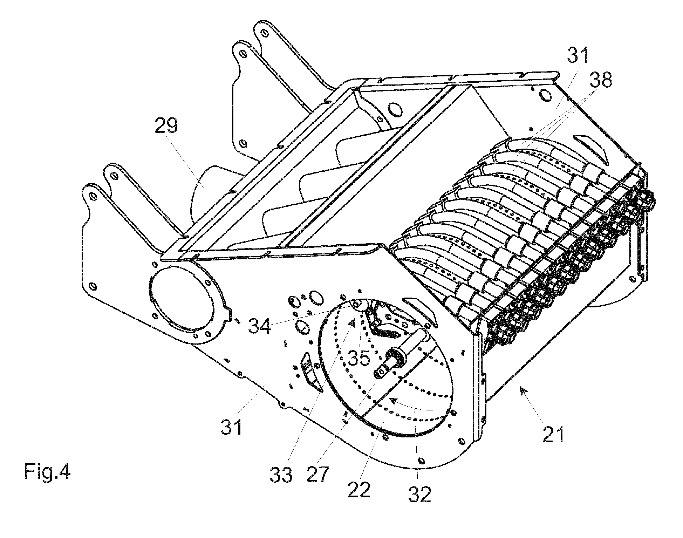

- Fig. 4: das Vereinzelungsgehäuse mit der Vereinzelungstrommel und der Vereinzelungsvorrichtung, ohne seitliche Lagerungselemente der Vereinzelungstrommel und ohne Saatgutvorratsbehälter der Einzelkornsämaschine in perspektivischer Ansicht,

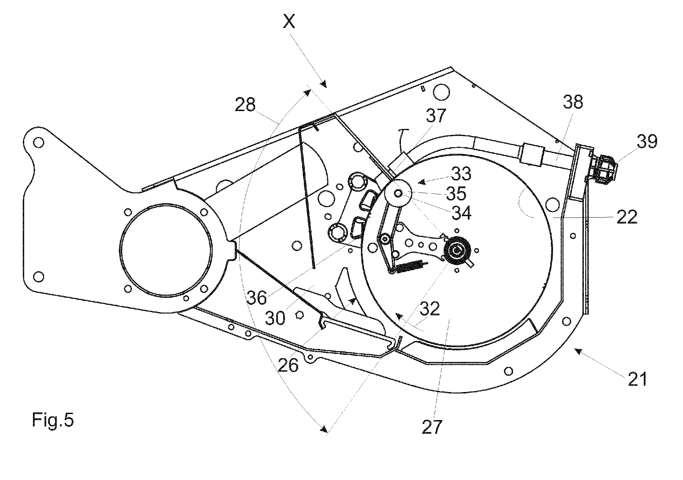

- Fig. 5: das Vereinzelungsgehäuse mit der Vereinzelungstrommel gemäß Fig.4 in Seitenansicht und

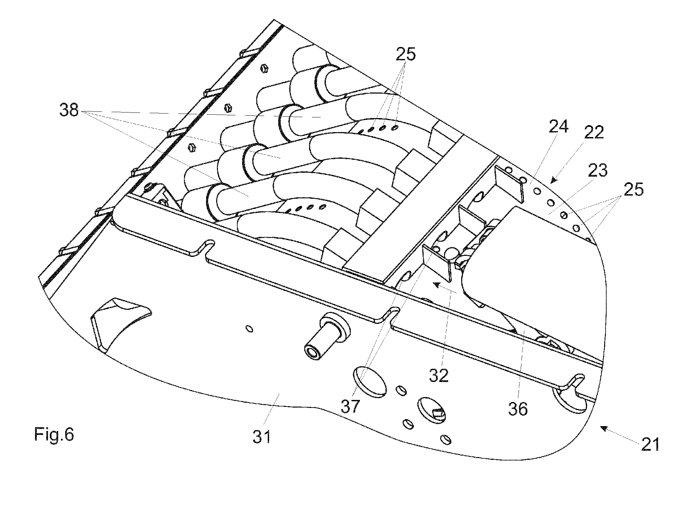

- Fig. 6: ein Teilbereich des Vereinzelungsgehäuses mit dem Ablöse- und Übergabebereich der Saatkörner von der Trommel in die Einmündungsöffnungen der Ausbringleitungen in vergrößertem Maßstab und perspektivischer Ansicht.

Der Einfachheit halber sind in der Zeichnung lediglich der Vorratsbehälter 1, die Dosiereinrichtung 2, die von dem angetriebenen Gebläse 3 pneumatisch beaufschlagte Förderleitung 4 und einem als Verteilerkopf 5 ausgebildeten Verteiler der landwirtschaftlichen pneumatischen Verteilmaschine, die als Sämaschine ausgebildet ist, dargestellt. In dem Vorratsbehälter 1 befindet sich das auszubringende Material, hier beispielsweise Saatgut. Dieses sich im Vorratsbehälter 1 befindliche Saatgut wird über das Dosierorgan 2 in einstellbaren Mengen über eine Schleuse 6 in den Förderluftstrom der Förderleitung 4 eingespeist. Über den horizontal verlaufenden Bereich 7 der Förderleitung wird das Saatgut von dem Luftstrom, der von dem angetriebenen Gebläse 3 erzeugt wird, dem zwischen dem horizontalen Bereich 7 der Förderleitung 4 und dem senkrecht aufsteigenden Bereich 8 des Zerstreuungsrohres 9 über den in der Förderleitung 4 angeordneten Umlenkbereich 10 zugeführt. Der senkrecht aufsteigende Bereich 8 der Förderleitung 4 weist einen Bereich auf, der als wellenförmiges Zerstreuungsrohr 9 ausgebildet ist. Am Ende der senkrecht aufsteigenden Förderleitung 4 ist der als Verteilerkopf 5 ausgebildet Verteiler angeordnet, von dem aus als Ausbringleitungen ausgebildete Abgangsleitungen 11, an denen zu einzelnen Ausbringorganen, die beispielsweise als Säschare ausbildet sind, führende Leitungen angeschlossen sind. Von dem Verteilerkopf 5 wird das dem Verteiler 6 zugeführte Saatgut in gleichmäßiger Weise auf die einzelnen Ausbringleitungen 11 aufgeteilt.

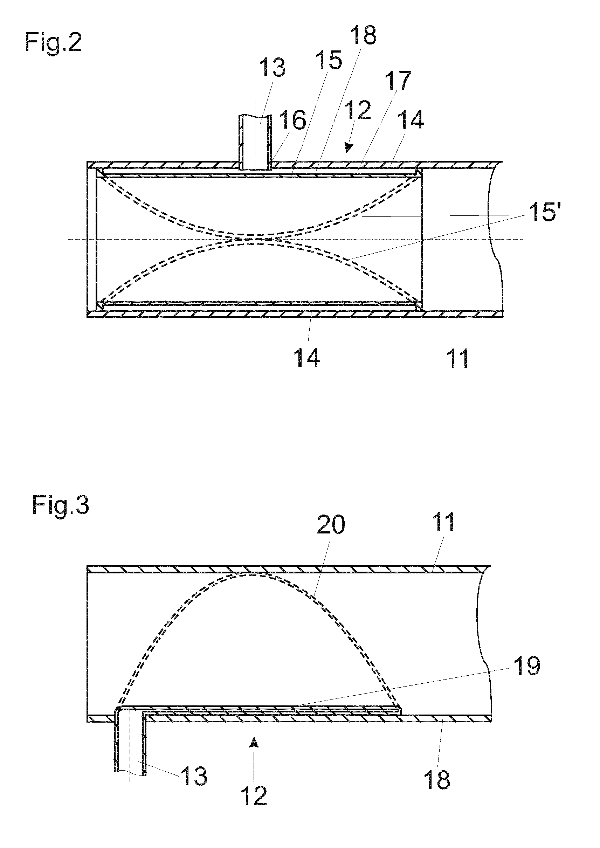

Zumindest einigen der Ausbringleitungen 11 sind im Abgangsbereich vom Verteilerkopf 5 als Quetschventile ausgebildete Absperrmittel 12 zugeordnet. Mittels dieser Quetschventile 12 können die jeweiligen Ausbringleitungen 11 abgesperrt werden, so dass diesen Ausbringleitungen 11 und damit den diesen Ausbringleitungen 11 zugeordneten Ausbringorganen kein zu verteilendes Material mehr zugeführt wird. Die Quetschventile 12 können beispielsweise als pneumatisch betätigbare Ventilelemente ausgebildet sein. Hierzu ist dann eine pneumatisch zu beaufschlagende Betätigungsleitung 13 an den Quetschventilen 12 angeordnet, wie anhand der Fig. 2 und 3 erläutert wird.

Bei dem Quetschventil 12 gemäß Fig. 2 ist in der Ausbringleitung 11 ein im entlasteten Zustand an die Innenwand 14 der Ausbringleitung 11 anliegendes umlaufendes aufblasbares Schlauchelement 15 angeordnet, wie mit durchgezogenen Linien dargestellt ist. Dem Quetschventil 12 ist die pneumatische Betätigungsleitung 13, die durch eine Aussparung 16 in der Ausbringleitung 12 in einen Zwischenraum 17 zwischen der Innenwand 14 und der Außenwand 18 des Schlauchelementes 15 mündet, zugeordnet. Wenn die pneumatische Betätigungsleitung 13 mit einem Luftdruck beaufschlagt wird, wird das Schlauchelement 15 aufgeblasen und sperrt so die Ausbringleitung 11 ab, wie mit unterbrochenen Linien 15' dargestellt ist.

Das Quetschventil 12 gemäß Fig. 3 unterscheidet sich von den dem Quetschventil gemäß Fig. 2 dadurch, dass das aufblasbare Schlauchelement 19 wie ein Ballon nur auf einen Teilbereich der Innenwand 14 der Ausbringleitung 11 anliegt, wie mit durchgezogenen Linien dargestellt ist. Dem Ballon 19 ist ebenfalls eine pneumatische Betätigungsleitung 13 zugeordnet. Wenn die pneumatische Betätigungsleitung 13 mit einem Luftdruck beaufschlagt wird, bläst sich der Ballon 19 auf, wie mit unterbrochenen Linien 20 dargestellt ist, auf und sperrt so die Ausbringleitung 11 ab.

Die Einzelkornsämaschine weist das Vereinzelungsgehäuse 21 mit der darin drehbar gelagerten und angetriebenen Vereinzelungstrommel 22, auf. Über eine nicht dargestellte Antriebsvorrichtung wird die Vereinzelungstrommel 22 in Rotation versetzt. Oberhalb der Vereinzelungstrommel 22 ist ein nicht dargestellter Vorratsbehälter angeordnet. In den Umfangsmantel 23 der Vereinzelungstrommel 22 sind kreisförmig in Perforationsreihen 24 angeordnete Perforationen 25 angebracht. Der Vorratsbehälter und das Vereinzelungsgehäuse 21 werden auf der Vereinzelungsseite 26 der Trommel 22 mit einem Überdruck beaufschlagt. Somit entsteht eine Druckdifferenz zwischen dem Innenraum 27 der Vereinzelungstrommel 22 und dem Außenbereich 26 der Vereinzelungstrommel 22 in deren Vereinzelungsbereich 28. Die Druckdifferenz wird durch ein nicht dargestelltes Gebläse erzeugt. Das Gebläse ist über den Anschlussstutzen 29 an das Vereinzelungsgehäuse mittels einer Luftleitung angeschlossen. Wenn die Vereinzelungstrommel 22 durch den Saatgutvorratsbereich 30, der sich zumindest in dem unteren Bereich der Vereinzelungstrommel 22 in dem Vereinzelungsgehäuse 21 befindet, geführt wird, lagern sich an der Perforationen auf der Außenseite 26 der perforierten Trommel 22 Samenkörner an. Die Seitenwände 31 des Vereinzelungsgehäuses 21 erstrecken sich parallel zur Bewegungsrichtung 32 der Trommel 21 und wirken zumindest annähernd abdichtend mit der Trommel 21 zusammen.

Des Weiteren ist der Trommel 22 eine die an die Perforationen 25 angelegte Druckdifferenz zum Ablösen der Samenkörner von den Perforationen 25 unterbrechende Abdeckeinrichtung 33 im Innenraum 27 der Trommel 22 angeordnet. Diese Abdeckeinrichtung 33 weist auf einer am Vereinzelungsgehäuse 21 angeordneten Welle 34 drehbar gelagerte walzenartige Elemente 35 auf.

Im Vereinzelungsbereich 28 der Trommel 22 ist zwischen dem Saatgutvorratsbereich 30 und dem Bereich, dem die Abdeckeinrichtung 33 zugeordnet ist, eine Abstreifereinrichtung 36 angeordnet, um Doppelbelegungen an den Perforationen 25 zu vermeiden.

Weiterhin weist die Einzelkornsämaschine bis an die Trommeloberfläche der Trommel 22 heranreichende, mit Einmündungsöffnungen 37 versehene Ausbringleitungen 38 auf, welche zu Ausbringelementen, wie beispielsweise Säscharen, führen. Mittels dieser Ausbringleitungen 38 sind die von der Vereinzelungstrommel 2 vereinzelten Saatkörner den Ausbringelementen mittels eines Luftstromes über die Ausbringleitungen 38 zuführbar. Hierbei reicht jeweils das eine Ende der Ausbringleitungen 38 mit ihrer jeweiligen Einmündungsöffnung 37 bis an die Trommeloberfläche der Trommel 22 heran, um so eine sichere Übergabe des vereinzelten Saatkornes über die jeweilige Einmündungsöffnung 37 in die jeweilige Ausbringleitung 38 zu gewährleisten. An die Verbindungsstücke der Ausbringleitungen 38 sind Ausbringverlängerungsleitungen, die die Ausbringleitungen 38 bis zu den Ausbringelementen verlängern, anzuschließen.

Zumindest einigen der Ausbringleitungen 38 sind als Quetschventile ausgebildete Absperrmittel 12 zugeordnet, wie sie in den Fig. 2 und 3 gezeigt und vor beschrieben sind. Mittels dieser Quetschventile 12 können die jeweiligen Ausbringleitungen 38 abgesperrt werden, so dass diesen Ausbringleitungen 38 und damit den diesen Ausbringleitungen 38 zugeordneten Ausbringorganen kein zu verteilendes Material mehr zugeführt wird. Die Quetschventile 12 können beispielsweise als pneumatisch betätigbare Ventilelemente ausgebildet sein. Hierzu ist dann eine pneumatisch zu beaufschlagende Betätigungsleitung 13 an den Quetschventilen 12 angeordnet, wie anhand der Fig. 2 und 3 erläutert wird.

## Patentansprüche

1. Landwirtschaftliche pneumatische Verteilmaschine zum Verteilen von körnigen Verteilergütern, insbesondere ein des Saatgutes und/oder Düngemittels mit zumindest einer Dosiervorrichtung für die dosierte pneumatische Förderung und Ausbringung des Verteilgutes aus dem Vorratsbehälter über Ausbringleitungen zu Ausbringorganen , insbesondere Säscharen und/oder Düngerstreuern, wobei zumindest einigen der Ausbringleitungen Absperrmittel zum Absperren der Ausbringleitungen zugeordnet sind, **dadurch gekennzeichnet, dass** die Absperrmittel als Quetschventile (12) ausgebildet sind.

2. Verteilmaschine nach Anspruch 1, **dadurch gekennzeichnet, dass** die Quetschventile (12) als pneumatische betätigbare Ventilelemente ausgebildet sind.

3. Verteilmaschine nach Anspruch 1, wobei die Verteilmaschine als pneumatische Einzelkornsämaschine mit einem einen Saatgutvorratsbehälter aufweisenden Gehäuse und zumindest einer drehbar angetriebenen Vereinzelungstrommel, in deren Umfangsmantel kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, ausgebildet ist, wobei das Gehäuse zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen angelegte Druckdifferenz zum Ablösen der Saatkörner von den Perforationen unterbrechende Abdeckeinrichtung im Innenraum der Trommel angeordnet ist, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, wobei die Einmündungsöffnungen der Ausbringleitungen und die zugeordneten Abdeckeinrichtungen im auf die Drehrichtung bezogenen aufsteigenden Rotationsbereich des Vereinzelungsbereiches der Trommel angeordnet sind, wobei zumindest einigen Ausbringleitungen motorisch betätigbare Absperrmittel zugeordnet sind, wobei die Absperrmittel beabstandet zu den Eingangsöffnungen der Ausbringleitungen in den Ausbringleitungen angeordnet sind.
